# FASCICULE DE BREVET EUROPEEN

(11) **EP 2 652 291 B1**
(45) Date de publication et mention de la délivrance du brevet: **25.02.2015**
(21) Numéro de dépôt: 11799752.8
(22) Date de dépôt: 04.11.2011
(51) Int. Cl.: F01K 13/00, F25J 3/04, F28C 3/08

(54) **PROCEDE ET APPAREIL INTEGRES DE COMPRESSION D'AIR ET DE PRODUCTION D'UN FLUIDE RICHE EN DIOXYDE DE CARBONE**
VERFAHREN UND SYSTEM ZUR INTEGRIERTEN KOMPRESSION VON LUFT UND ERZEUGUNG EINES KOHLENDIOXYDREICHEN FLUIDS
METHOD AND SYSTEM FOR INTEGRATED COMPRESSING AIR AND PRODUCTION OF A CARBON DIOXIDE RICH FLUID

(30) Priorité: 15.12.2010 FR 1060574
(43) Date de publication de la demande: 23.10.2013
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur Des Fosses (FR); TRANIER, Jean-Pierre, F-94240 L'hay-les-Roses (FR)
(74) Mandataire: Mercey, Fiona Susan
(86) Numéro de dépôt international: PCT/FR2011/052573
(87) Numéro de publication internationale: WO 2012/080601

(56) Documents cités:
- EP-A1- 1 132 594
- EP-A2- 1 039 115
- DE-A1- 10 330 859
- DE-A1- 19 539 774
- FR-A1- 2 878 294
- FR-A1- 2 946 099
- US-A- 6 148 602
- US-A1- 2003 131 582
- US-B1- 6 389 799

## Description

La présente invention est relative à un procédé et à un appareil intégrés de compression, voire séparation, d'air et de production d'un fluide riche en dioxyde de carbone. Un tel procédé et appareil est connu de DE 10330859.

Un fluide riche en dioxyde de carbone contient au moins 30% mol. de dioxyde de carbone ou au moins 60% mol. de dioxyde de carbone, voire au moins 80% mol. de dioxyde de carbone, ou même au moins 95% mol. de dioxyde de carbone.

Afin de réduire les émissions de CO₂ d'origine humaine dans l'atmosphère, des procédés de capture du CO₂ générés dans un procédé donné sont développés. Il s'agît d'extraire le CO₂ d'un gaz généré par le procédé, éventuellement de le purifier et enfin, en général, de le comprimer afin de le transporter dans une canalisation.

Notons immédiatement qu'une autre voie pour transporter le CO₂ est de le liquéfier et de le charger sur des bateaux conçus pour cet usage. Certains cycles de liquéfaction du CO₂ passent par la compression du CO₂ à une pression telle qu'il peut être condensé à une température proche de l'ambiante. Le liquide est ensuite détendu à la pression de transport (typiquement entre 6 et 10 bars a). L'invention sera alors applicable à ce type d'usine.

Notons de plus qu'en dépit des différences importantes entre les procédés de capture du CO₂ (en post-combustion, on peut citer le lavage aux amines ou à l'ammoniaque ; il y a aussi la gazéification du combustible, les procédés de boucles chimiques, les procédés sidérurgiques, cimenteries ou tout procédé industriel utilisant de l'air), quasiment tous comportent une compression du CO₂ relativement pur et sont donc susceptibles de valoriser l'invention décrite ci-après.

Les pressions de fourniture du CO₂ dans les canalisations sont en général supérieures à 150 bars abs. Dans l'état de l'art, le CO₂ est comprimé jusqu'à la pression finale dans un compresseur centrifuge (étant donné les débits considérés dans les applications de capture du CO₂ sur des usines).

Un aspect de l'invention se base sur le fait qu'aux environs de 60 bars, le CO₂ peut être condensé à une température proche de l'ambiante. Une fois sous une forme condensée (la densité est multipliée par un facteur 3 à 500), pomper le CO₂ consomme beaucoup moins d'énergie que de comprimer la même quantité sous la forme gazeuse.

Par la suite, on désignera par « compression » le moyen d'élever la pression d'un gaz et par « pompage » le moyen d'élever la pression d'un fluide possédant une densité supérieure à 500 kg/m³, ce qui est la limite basse de densité acceptable pour des pompes

On assimile aussi les termes de « flux riche en CO₂ » et de « CO₂ »

Notons que, à composition donnée, la pression à laquelle il faut comprimer un gaz pour le condenser à une température donnée croît avec la température. De même à température donnée, la pression de condensation croît avec la teneur en incondensables (éléments plus volatiles que le CO₂, par exemple CO, H₂, O₂, N₂, Ar, NO).

Un aspect de l'invention consiste à refroidir le fluide riche en CO₂ sortant d'un procédé industriel, par exemple, de manière à condenser une partie de l'eau qu'il contient, afin de diminuer l'énergie de compression du CO₂. Un aspect facultatif de l'invention consiste donc à réduire les coûts opératoires en complétant la compression avec une pompe après avoir condensé le flux riche en CO₂.

Le recyclage de l'eau froide utilisée pour refroidir le fluide riche en CO₂ permet au procédé d'opérer en autonomie et de ne pas consommer de l'eau.

Selon un objet de l'invention, il est prévu un procédé intégré de compression d'air et de production d'un fluide riche en dioxyde de carbone comprenant les étapes de :
i) mettre en contact de l'air destiné à un compresseur d'air avec de l'eau pour produire de l'air humidifié, voire saturé en eau, et de l'eau refroidie
ii) comprimer l'air humidifié dans le compresseur pour produire de l'air comprimé,
iii) utiliser au moins une partie de l'air comprimé ou un fluide produit en séparant l'air comprimé dans une installation produisant un gaz riche en dioxyde de carbone,
iv) comprimer le gaz riche en dioxyde de carbone dans un compresseur de dioxyde de carbone, et
v) refroidir le gaz riche en dioxyde de carbone en amont et/ou en aval du compresseur de dioxyde de carbone avec des frigories de l'eau refroidie de l'étape i).

Les étapes ii) à iv) sont connues de DE 10330859. L'invention est caractérisée par l'integration des étapes i) et v).

Selon d'autres aspects facultatifs :
- on refroidit l'air provenant du compresseur d'air pour condenser de l'eau contenue dans l'air et on utilise l'eau contenue dans l'air pour humidifier l'air destiné au compresseur d'air.
- on refroidit un gaz résiduaire contenant du dioxyde de carbone provenant de l'installation pour condenser de l'eau qu'il contient, on utilise l'eau pour refroidir l'air destiné au compresseur d'air et on traite le gaz résiduaire pour produire le gaz riche en dioxyde de carbone.
- on refroidit le gaz riche en dioxyde de carbone en aval du compresseur de dioxyde de carbone afin de le condenser et on pressurise le liquide produit riche en dioxyde de carbone dans une pompe.
- un débit enrichi en oxygène ou un débit enrichi en azote ou un débit enrichi en argon est le fluide produit en séparant l'air.
- l'installation est une installation d'oxycombustion ou une installation de production de métaux sidérurgique ou un gazéifieur.
- de l'air comprimé est utilisé dans l'installation.
- l'installation est une cimenterie, une installation de production de métaux, par exemple une installation sidérurgique ou une turbine à gaz.

Selon un autre aspect de l'invention, il est prévu un appareil intégré de compression d'air et de production d'un fluide riche en dioxyde de carbone comprenant un compresseur d'air, un élément de mise en contact de l'air destiné au compresseur d'air avec de l'eau pour produire de l'air humidifié, voire saturé en eau, et de l'eau refroidie, une conduite pour envoyer l'air humidifié comprimé du compresseur d'air à une installation produisant un gaz riche en dioxyde de carbone ou une conduite pour envoyer un fluide produit en séparant l'air comprimé à l'installation, un compresseur de gaz riche en dioxyde de carbone pour comprimer le gaz riche en dioxyde de carbone, au moins un échangeur de chaleur en amont et/ou en aval du compresseur de gaz riche en dioxyde de carbone et des conduites pour envoyer à l'échangeur de chaleur de l'eau refroidie dans l'élément de mise en contact et le gaz riche en dioxyde de carbone.

L'élément de mise en contact peut être intégré avec un élément de filtration d'air dans un même caisson.

L'appareil peut comprendre un refroidisseur pour refroidir l'air provenant du compresseur d'air pour condenser de l'eau contenue dans l'air et une conduite pour amener l'eau contenue dans l'air pour humidifier l'air destiné au compresseur d'air.

L'appareil peut également comprendre un refroidisseur pour refroidir un gaz résiduaire contenant du dioxyde de carbone provenant de l'installation pour condenser de l'eau qu'il contient et une conduite pour envoyer l'eau condensée pour refroidir l'air destiné au compresseur d'air. L'appareil peut comprendre des moyens de traitement du gaz résiduaire dépourvu d'eau pour produire le gaz riche en dioxyde de carbone.

L'échangeur peut être en aval du compresseur de dioxyde de carbone pour refroidir le gaz riche en dioxyde de carbone afin de le condenser et une pompe pour pressuriser le liquide produit riche en dioxyde de carbone.

L'appareil peut comprendre un appareil de séparation d'air pour produire un débit enrichi en oxygène ou un débit enrichi en azote ou un débit enrichi en argon en séparant l'air du compresseur, après séchage.

L'installation peut être une installation d'oxycombustion ou une installation de production de métaux sidérurgique ou un gazéifieur.

L'installation peut comprendre une conduite pour envoyer l'air comprimé à l'installation.

L'installation peut être une cimenterie, une installation de production de métaux, par exemple une installation sidérurgique ou une turbine à gaz.

L'invention sera décrite en plus de détail en se référant aux figures, les Figures 1 et 2 illustrant un procédé intégré selon l'invention et la Figure 3 illustre les éléments 3 et 7 des Figures précédentes.

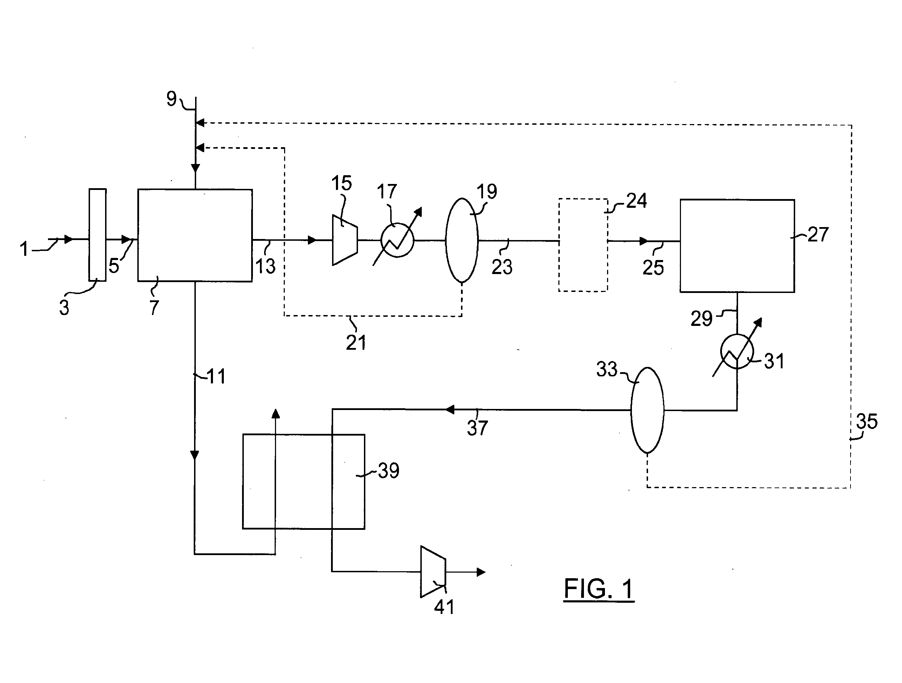

La Figure 1 montre un procédé intégré comprenant un appareil de compression d'air et un appareil de production d'un gaz riche en dioxyde de carbone.

Un débit d'air est épuré dans un filtre 3 et l'air filtré 5 est envoyé à un élément 7 permettant un échange de chaleur et de matière entre l'air filtré 5 et de l'eau 9, l'eau 9 étant à une température moins élevée que l'air 5. Après l'échange de chaleur et de matière, l'air filtré 5 est enrichi en eau, éventuellement jusqu'à saturation et éventuellement réchauffé pour constituer le débit 13. L'eau refroidie dans l'élément 7 constitue le débit d'eau 11. Le débit d'air 13 est comprimé dans le compresseur 15 à une pression entre 3 et 15 bars abs. Ensuite il est refroidi dans un refroidisseur 17, ce qui a pour effet de condenser au moins une partie de l'eau contenue dans l'air 13. L'eau se sépare de l'air dans un séparateur de phases 19 pour former le débit 21 qui est recyclé au moins en partie vers le débit 9. Ainsi l'eau rajoutée à l'air 5 pour former le débit humide 13 peut être substantiellement entièrement recyclé à l'élément 7 de sorte que le procédé puisse fonctionner sans ou quasiment sans appoint d'eau. L'air séché 23 provenant du séparateur de phases 19 peut être envoyé directement à une unité 27 comme débit 25 pour alimenter un procédé opéré par l'unité ou pour servir à refroidir une partie de l'unité. L'unité 27 peut dans ce cas être une cimenterie, une turbine à gaz ou une installation de production de métaux, par exemple d'acier ou de fer. Autrement l'air séché 23 peut être envoyé à un appareil de séparation d'air 24, fonctionnant par exemple par distillation cryogénique, pour produire un débit 25 enrichi en oxygène ou en azote ou en argon. Ce débit 25 alimente l'unité 27 qui peut être une unité de gazéification, une unité de combustion, une unité de production d'électricité par combustion si le débit est enrichi en oxygène, une unité de production de métaux, pour les trois possibilités d'enrichissement.

Dans tous les cas, l'unité 27 produit un débit 29 contenant au moins 30% de dioxyde de carbone, voire au moins 70% de dioxyde de carbone. Au moins une partie du restant du débit 29 peut être de l'hydrogène, de l'azote ou du monoxyde de carbone, par exemple. Le débit 29 contient également au moins 10% d'eau. Cette eau est éliminée en refroidissant le débit 29 avec le refroidisseur 31 et en laissant l'eau se condenser dans le séparateur de phases 33. L'eau condensée 35 est éventuellement recyclée au débit 9.

Le débit 37 contenant au moins 30% de dioxyde de carbone est refroidi dans un échangeur de chaleur indirect 39 contre au moins de l'eau 11 issue de l'élément 7, qui n'a pas été refroidie en dehors de l'élément 7.

Le débit 37 refroidi est envoyé au compresseur 41 et comprimé jusqu'à une pression de préférence de 55 à 65 bars abs

Le débit comprimé peut ensuite est épuré dans une unité de distillation à basse température ou traité autrement.

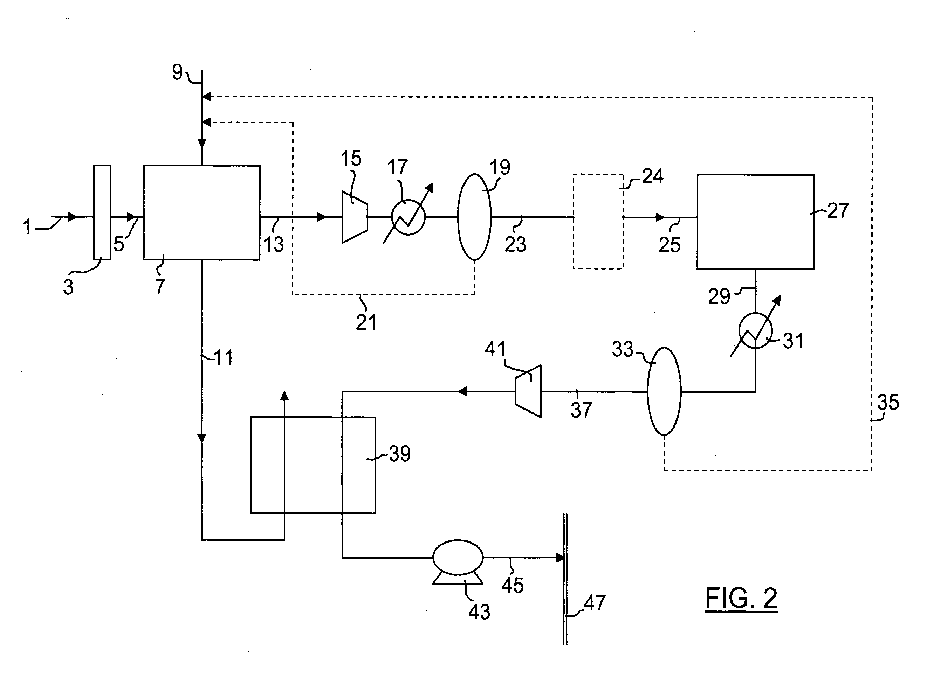

La Figure 2 diffère de la Figure 1 en ce que la compression du débit dans le compresseur 41 a lieu en amont de l'échangeur 39. Le débit refroidi 37 se liquéfie dans l'échangeur 39 ou se refroidit s'il est déjà à une pression supercritique et est ensuite pressurisé par la pompe 43 à une pression plus élevée pour former le liquide sous pression 45. Ce débit liquide 45 peut être envoyé à une canalisation 47, solidifié ou traité autrement. Dans le cas de l'envoi à une canalisation la pression de sortie de la pompe 43 pourra être au-dessus de 150 bars abs et le gaz 37 est comprimé en amont par le compresseur jusqu'à une pression intermédiaire. Il est également envisageable de purifier le débit 37 par exemple dans une unité de distillation à basse température pour l'enrichir en CO₂ entre le séparateur de phases 33 et le compresseur 41.

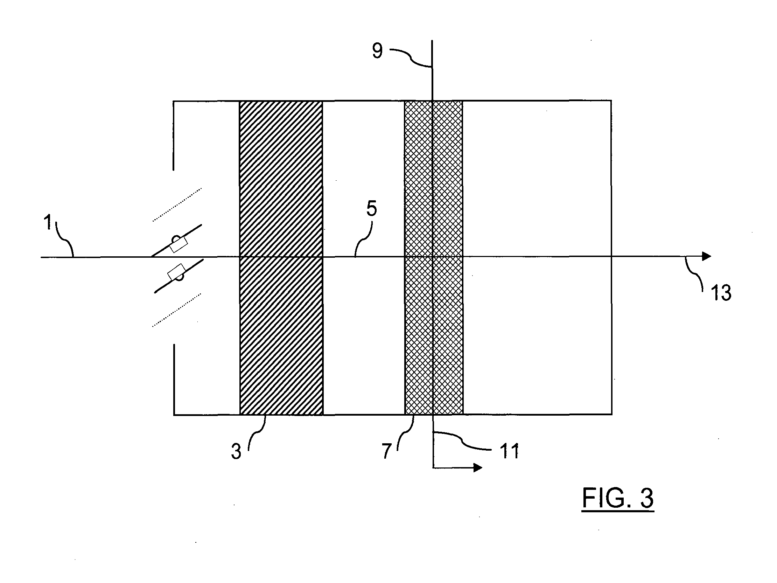

La figure 3 montre en plus de détail les éléments 3 et 7 des figures précédentes.

Un caisson commun contient un élément de filtration 3 et un élément de mise en contact 7. L'air 1 est filtré dans l'élément de filtration 3 et ensuite humidifié par le contact avec l'eau 11. L'eau 11 sortant de l'élément 7 s'en trouve refroidie et l'air humidifié 13 est traité dans le reste du procédé. L'élément de mise en contact 7 peut être constitué par un corps de garnissage permettant l'échange de matière et de chaleur entre l'eau et l'air.

Le débit 11 est recyclé au débit 9 si le procédé ne consomme pas d'eau. Il peut par exemple être envoyé à un système de refroidissement, par exemple de type aéro-réfrigérant, avant d'être envoyé à l'élément 7. Les fluides 21 et/ou 35 peuvent d'ailleurs être mélangés au débit 11 avant ce pré-refroidissement.

Dans tous les cas, il est possible qu'à la fois de l'air comprimé dans le compresseur 15 et un fluide produit en séparant le reste de l'air comprimé dans le compresseur soient tous deux envoyés à la même installation 27.

## Revendications

1. Procédé intégré de compression d'air et de production d'un fluide riche en dioxyde de carbone comprenant les étapes de :
i) mettre en contact de l'air destiné à un compresseur d'air (15) avec de l'eau pour produire de l'air humidifié, voire saturé en eau, (13) et de l'eau refroidie (11),
ii) comprimer l'air humidifié dans le compresseur pour produire de l'air comprimé,
iii) utiliser au moins une partie de l'air comprimé ou un fluide produit en séparant l'air comprimé dans une installation (27) produisant un gaz riche en dioxyde de carbone (29, 37),
iv) comprimer le gaz riche en dioxyde de carbone dans un compresseur de dioxyde de carbone (41), et
v) refroidir le gaz riche en dioxyde de carbone en amont et/ou en aval du compresseur de dioxyde de carbone avec des frigories de l'eau refroidie de l'étape i).

2. Procédé selon la revendication 1 dans lequel on refroidit l'air provenant du compresseur d'air (15) pour condenser de l'eau contenue dans l'air et on utilise l'eau contenue dans l'air pour humidifier l'air destiné au compresseur d'air.

3. Procédé selon la revendication 1 ou 2 dans lequel on refroidit un gaz résiduaire contenant du dioxyde de carbone (29) provenant de l'installation (27) pour condenser de l'eau qu'il contient, on utilise l'eau (35) pour refroidir l'air destiné au compresseur d'air et on traite le gaz résiduaire pour produire le gaz riche en dioxyde de carbone (37).

4. Procédé selon l'une des revendications précédentes dans lequel on refroidit le gaz riche en dioxyde de carbone en aval du compresseur de dioxyde de carbone (37) afin de le condenser et on pressurise le liquide produit riche en dioxyde de carbone dans une pompe (43).

5. Procédé selon l'une des revendications précédentes dans lequel un débit enrichi en oxygène ou un débit enrichi en azote ou un débit enrichi en argon est le fluide produit en séparant l'air dans un appareil de séparation d'air (24).

6. Procédé selon la revendication 5 dans lequel l'installation (27) est une installation d'oxycombustion ou une installation de production de métaux sidérurgique ou un gazéifieur.

7. Procédé selon l'une des revendications 1 à 6 dans lequel de l'air comprimé est utilisé dans l'installation (27).

8. Procédé selon la revendication 7 dans lequel l'installation (27) est une cimenterie, une installation de production de métaux, par exemple une installation sidérurgique ou une turbine à gaz.

9. Appareil de compression d'air et de production d'un fluide riche en dioxyde de carbone comprenant un compresseur d'air (15), un élément (7) de mise en contact de l'air destiné au compresseur d'air avec de l'eau pour produire de l'air humidifié (13), voire saturé en eau, et de l'eau refroidie (11), une conduite pour envoyer l'air humidifié comprimé du compresseur d'air à une installation (27) produisant un gaz riche en dioxyde de carbone (29, 37) ou une conduite pour envoyer un fluide produit en séparant l'air comprimé à l'installation, un compresseur (41) de gaz riche en dioxyde de carbone pour comprimer le gaz riche en dioxyde de carbone, au moins un échangeur de chaleur (39) en amont et/ou en aval du compresseur de gaz riche en dioxyde de carbone et des conduites pour envoyer à l'échangeur de chaleur de l'eau refroidie dans l'élément de mise en contact et le gaz riche en dioxyde de carbone.

10. Appareil selon la revendication 9 dans lequel l'élément de mise en contact (7) est intégré avec un élément de filtration d'air (3) dans un même caisson.

11. Appareil selon la revendication 9 ou 10 comprenant un refroidisseur (17) pour refroidir l'air provenant du compresseur d'air pour condenser de l'eau contenue dans l'air et une conduite (21) pour amener l'eau contenue dans l'air pour humidifier l'air destiné au compresseur d'air.

12. Appareil selon l'une des revendications 9 à 11 comprenant un refroidisseur (31) pour refroidir un gaz résiduaire contenant du dioxyde de carbone provenant de l'installation pour condenser de l'eau qu'il contient et une conduite (35) pour envoyer l'eau condensée pour refroidir l'air destiné au compresseur d'air.

13. Appareil selon l'une des revendications 9 à 12 comprenant des moyens de traitement du gaz résiduaire dépourvu d'eau pour produire le gaz riche en dioxyde de carbone.

14. Appareil selon l'une des revendications 9 à 13 comprenant un appareil de séparation d'air pour produire un débit enrichi en oxygène ou un débit enrichi en azote ou un débit enrichi en argon en séparant l'air du compresseur, après séchage.

15. Appareil selon l'une des revendications 9 à 14 dans lequel l'installation (27) est une installation d'oxycombustion ou une installation de production de métaux sidérurgique ou un gazéifieur.

## Patentansprüche

1. Integriertes Verfahren zum Komprimieren von Luft und zum Erzeugen eines kohlendioxidreichen Fluids, das die folgenden Schritte beinhaltet:
i) Inkontaktbringen von für einen Luftkompressor (15) bestimmter Luft mit Wasser zum Erzeugen von befeuchteter, sogar mit Wasser gesättigter Luft (13) und von gekühltem Wasser (11),
ii) Komprimieren der befeuchteten Luft in dem Kompressor zum Erzeugen von Druckluft,
iii) Benutzen wenigstens eines Teils der Druckluft oder eines Fluids, produziert durch Abscheiden der Druckluft in einer Anlage (27), die ein kohlendioxidreiches Gas (29, 37) erzeugt,
iv) Komprimieren des kohlendioxidreichen Gases in einem Kohlendioxidkompressor (41), und
v) Kühlen des kohlendioxidreichen Gases oberhalb und/oder unterhalb des Kohlendioxidkompressors mit Kältefluiden von gekühltem Wasser aus Schritt i).

2. Verfahren nach Anspruch 1, bei dem die Luft von dem Luftkompressor (15) gekühlt wird, um das in der Luft enthaltene Wasser zu kondensieren, und das in der Luft enthaltene Wasser zum Befeuchten der für den Luftkompressor bestimmten Luft benutzt wird.

3. Verfahren nach Anspruch 1 oder 2, bei dem ein Kohlendioxid (29) enthaltenes Restgas aus der Anlage (27) gekühlt wird, um das darin enthaltene Wasser zu kondensieren, das Wasser (35) zum Kühlen der für den Luftkompressor bestimmten Luft benutzt wird und das Restgas zum Erzeugen des kohlendioxidreichen Gases (37) behandelt wird.

4. Verfahren nach einem der vorherigen Ansprüche, bei dem das kohlendioxidreiche Gas oberhalb des Kohlendioxidkompressors (37) gekühlt wird, um es zu kondensieren, und die produzierte kohlendioxidreiche Flüssigkeit in einer Pumpe (43) unter Druck gesetzt wird.

5. Verfahren nach einem der vorherigen Ansprüche, bei dem eine mit Sauerstoff angereicherte Durchflussmenge oder eine mit Stickstoff angereicherte Durchflussmenge oder eine mit Argon angereicherte Durchflussmenge das Fluid ist, das durch Abscheiden der Luft in einer Luftabscheidungsvorrichtung (24) erzeugt wird.

6. Verfahren nach Anspruch 5, bei dem die Anlage (27) eine Oxy-Combustion-Anlage oder eine Eisen-/Stahlhüttenanlage oder ein Gasgenerator ist.

7. Verfahren nach einem der Ansprüche 1 bis 6, bei dem die Druckluft in der Anlage (27) benutzt wird.

8. Verfahren nach Anspruch 7, bei dem die Anlage (27) ein Zementwerk, eine Metallproduktionsanlage, z. B. eine Eisen-/Stahlhüttenanlage oder eine Gasturbine ist.

9. Vorrichtung zum Komprimieren von Luft und zum Erzeugen eines kohlendioxidreichen Fluids, umfassend einen Luftkompressor (15), ein Element (7) zum Inkontaktbringen von für den Luftprozessor bestimmter Luft mit Wasser zum Erzeugen von befeuchteter, sogar mit Wasser gesättigter Luft (13) und von gekühltem Wasser (11), eine Leitung zum Übertragen von befeuchteter Druckluft von dem Luftkompressor zu einer Anlage (27), die ein kohlendioxidreiches Gas (29, 37) erzeugt, oder eine Leitung zum Übertragen eines Fluids, produziert durch Abscheiden der in der Anlage komprimierten Luft, einen Kompressor (41) für kohlendioxidreiches Gas zum Komprimieren des kohlendioxidreichen Gases, wenigstens einen Wärmetauscher (39) oberhalb und/oder unterhalb des Kompressors für kohlendioxidreiches Gas und Leitungen zum Übertragen von in dem Inkontaktbringungselement gekühltem Wasser und des kohlendioxidreichen Gases zum Wärmetauscher.

10. Vorrichtung nach Anspruch 9, bei dem das Inkontaktbringungselement (7) mit einem Luftfilterelement (3) im selben Kasten integriert ist.

11. Vorrichtung nach Anspruch 9 oder 10, die einen Kühler (17) zum Kühlen der Luft vom Luftkompressor umfasst, um das in der Luft enthaltene Wasser zu kondensieren, und eine Leitung (21) zum Führen des in der Luft enthaltenen Wassers, um die für den Luftkompressor bestimmte Luft zu befeuchten.

12. Vorrichtung nach einem der Ansprüche 9 bis 11, die einen Kühler (31) zum Kühlen eines Restgases, das Kohlendioxid von der Anlage enthält, um das darin enthaltene Wasser zu kondensieren, und eine Leitung (35) zum Einbringen des kondensierten Wassers zum Kühlen der für den Luftkompressor bestimmten Luft umfasst.

13. Vorrichtung nach einem der Ansprüche 9 bis 12, die Mittel zum Behandeln des wasserfreien Restgases umfasst, um das kohlendioxidreiche Gas zu produzieren.

14. Vorrichtung nach einem der Ansprüche 9 bis 13, die eine Vorrichtung zum Abscheiden von Luft umfasst, um eine mit Sauerstoff angereicherte Durchflussmenge oder eine mit Stickstoff angereicherte Durchflussmenge oder eine mit Argon angereicherte Durchflussmenge durch Abscheiden der Luft des Kompressors nach dem Trocknen zu produzieren.

15. Vorrichtung nach einem der Ansprüche 9 bis 14, bei der die Anlage (27) eine Oxy-Combustion-Anlage oder eine Eisen-/Stahlhüttenanlage oder ein Gasgenerator ist.

## Claims

1. Integrated process for compressing air and producing a carbon dioxide-rich fluid, comprising the steps of:
i) contacting air intended for an air compressor (15) with water to produce humidified air (13), or even water-saturated air, and cooled water (11);
ii) compressing the humidified air in the compressor to produce compressed air;
iii) using at least part of the compressed air or a fluid produced by separating the compressed air in a plant (27) that produces a carbon dioxide-rich gas (29, 37);
iv) compressing the carbon dioxide-rich gas in a carbon dioxide compressor (41); and
v) cooling the carbon dioxide-rich gas upstream and/or downstream of the carbon dioxide compressor using cold energy of the cooled water of step i).

2. Process according to claim 1, wherein the air from the air compressor (15) is cooled to condense water present in the air, and the water present in the air is used to humidify the air intended for the air compressor.

3. Process according to either claim 1 or claim 2, wherein a residual gas, containing carbon dioxide (29), from the plant (27) for condensing water therein is cooled, the water (35) is used to cool the air intended for the air compressor, and the residual gas is treated to produce the carbon dioxide-rich gas (37).

4. Process according to any of the preceding claims, wherein the carbon dioxide-rich gas is cooled downstream of the carbon dioxide compressor (37) so as to condense said carbon dioxide-rich gas, and the carbon dioxide-rich liquid produced is pressurised in a pump (43).

5. Process according to any of the preceding claims, wherein an oxygen-enriched stream, a nitrogen-enriched stream or an argon-enriched stream is the fluid produced by separating the air in an air separation apparatus (24).

6. Process according to claim 5, wherein the plant (27) is an oxyfuel combustion plant, a ferrous metals production plant or a gasifier.

7. Process according to any of claims 1 to 6, wherein compressed air is used in the plant (27).

8. Process according to claim 7, wherein the plant (27) is a cement plant, a plant for producing metals, for example a plant for producing steel, or a gas turbine.

9. Apparatus for compressing air and producing a carbon dioxide-rich fluid, comprising an air compressor (15), an element (7) for contacting the air intended for the air compressor with water to produce humidified air (13), or even water-saturated air, and cooled water (11), a line for sending the compressed humidified air from the air compressor to a plant (27) producing a carbon dioxide-rich gas (29, 37) or a line for sending a fluid, produced by separating the compressed air, to the plant, a carbon dioxide-rich gas compressor (41) for compressing the carbon dioxide-rich gas, at least one heat exchanger (39) upstream and/or downstream of the carbon dioxide-rich gas compressor, and lines for sending water cooled in the contacting element and the carbon dioxide-rich gas to the heat exchanger.

10. Apparatus according to claim 9, wherein the contacting element (7) is integrated with an air filtration element (3) in a single box.

11. Apparatus according to either claim 9 or claim 10, comprising a cooler (17) for cooling the air from the air compressor for condensing water present in the air, and a line (21) for conveying the water present in the air for humidifying the air intended for the air compressor.

12. Apparatus according to any of claims 9 to 11, comprising a cooler (31) for cooling a residual gas containing carbon dioxide originating from the plant for condensing water contained therein, and a line (35) for sending the condensed water for cooling the air intended for the air compressor.

13. Apparatus according to any of claims 9 to 12, comprising means for treating the residual gas lacking water to produce the carbon dioxide-rich gas.

14. Apparatus according to any of claims 9 to 13, comprising an air separation apparatus for producing an oxygen-enriched stream, a nitrogen-enriched stream or an argon-enriched stream by separating the air from the compressor, after drying.

15. Apparatus according to any of claims 9 to 14, wherein the plant (27) is an oxyfuel combustion plant, a ferrous metals production plant or a gasifier.
